# EUROPEAN PATENT SPECIFICATION

(11) **EP 2 819 426 B1**
(45) Date of publication and mention of the grant of the patent: **27.12.2017**
(21) Application number: 14185994.2
(22) Date of filing: 28.07.2004
(51) Int. Cl.: H04Q 9/00, B01D 1/06, B01D 1/22, B01D 1/28, B01D 3/10, B01D 3/42, B01D 5/00, B01D 35/12, B01D 29/01, F04C 19/00, F04C 29/00

(54) **Systems and methods for water purification**
Systeme und Verfahren zur Wasserreinigung
Systèmes et procédés de purification d'eau

(30) Priority: 28.07.2003 US 490615 P; 10.11.2003 US 518782 P
(43) Date of publication of application: 31.12.2014
(62) Divisional of application: 04779401.1
(73) Proprietor: DEKA PRODUCTS LIMITED PARTNERSHIP, Manchester, NH 03101-1108 (US)
(72) Inventor: Kamen, Dean, Bedford, NH 03110 (US); Demers, Jason A, Manchester, NH 03104 (US); Owens, Kingston, Bedford, NH (US)
(74) Representative: Gill Jennings & Every LLP

(56) References cited:
- EP-A- 1 202 594
- WO-A-03/056680
- US-A- 5 973 481

## Description

### Technical Field

The present invention relates to the field of distributed utilities, and, more particularly, to distributed water purification systems and distributed power.

### Background Art

In many developing countries and remote areas without power plants and water purification plants, access to electricity and safe drinking water is a significant need. Often in such areas, poor financial resources, limited technical assets, and low population density does not make it feasible to build power plants and water purification plants to provide these resources to the population. In such circumstances, the use of distributed utilities may provide a solution. Distributed water purification systems, such as described in US Provisional Application 60/425,820, and distributed electrical generators, such as diesel-powered internal combustion generators and generators based on the Stirling cycle, such as described in U.S. Patent No. 6,253,550, may be used to provide electricity and safe drinking water without the expense and delays associated with building and maintaining utility plants and the infrastructure required to bring the electricity and safe drinking water and to its point of use. With such the use of such distributed utilities, however, comes the need to appropriately distribute these utilities to the people who need them and to monitor the operation and correct usage of these systems.

### Summary of the Invention

In accordance with preferred embodiments of the present invention, a monitoring system for water purification is provided according to appended claim 1.

The generator is a purifier for providing potable water. The monitoring system has a controller for concatenating measured input and consumption of output on the basis of the input and output sensors.

Other preferred features of the invention are recited in appended claims 2 to 15. The input sensor may be a flow rate monitor. The output sensor comprises a water quality sensor which may include one or more of turpidity, conductivity, and temperature sensors.

The monitoring system may also have a telemetry module for communicating measured input and output parameters to a remote site, either directly or via an intermediary device such as a satellite, and, moreover, the system may include a remote actuator for varying operating parameters of the generator based on remotely received instructions. The monitoring system may also have a self-locating device, such as a GPS receiver, having an output indicative of the location of the monitoring system. In that case, characteristics of the measured input and output may depend upon the location of the monitoring system.

### Brief Description of the Drawings

The foregoing features of the invention will be more readily understood by reference to the following detailed description, taken with reference to the accompanying drawings, in which:
Fig. **1** is a depiction of a monitoring system for water purification in accordance with embodiments of the present invention; and
Fig. **2** is a depiction of a distribution system for utilities.

### Detailed Description of Specific Embodiments

### Monitoring

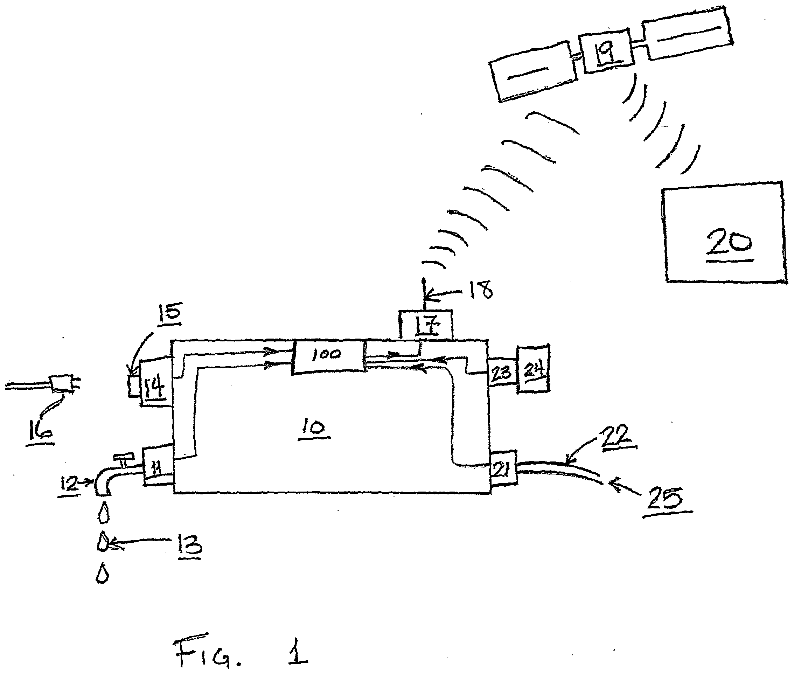

Referring first to Fig. 1, preferred embodiments of the present invention provide for monitoring generation device **10** for water purification. In alternative arrangements not forming part of the invention generation device **10** can be any distributed utility generation device, such as an electrical generator, or other utility generation device, or a combination of these. Generation device **10** may typically be characterized by a set of parameters that describe its current operating status and conditions. Such parameters may include, without limitation, its temperature, its input or output flux, etc., and may be subject to monitoring by means of sensors, as described in detail below.

In the case in which generation device **10** is a water purification device as in the present invention, source water enters the generation device **10** at inlet **22** and leaves the generation device at outlet **12.** The amount of source water **25** entering generation device **10** and the amount' of purified water **13** leaving generation device **10** can be monitored through the use of one or more of a variety of sensors commonly used to determine flow rate, such as sensors for determining the temperature and pressure or a rotometer, located at inlet sensor module **21** and/or at outlet sensor module **11,** either on a per event or cumulative basis. Additionally, the proper functioning of the generation device **10** can be determined by measuring the turpidity, conductivity, and/or temperature at the outlet sensor module **11** and/or the inlet sensor module **21.** Other parameters, such as system usage time or power consumption, either per event or cumulatively, can also be determined. A sensor can be coupled to an alarm or shut off switch that may be triggered when the sensor detects a value outside a pre-programmed range.

When the location of the system is known, either through direct input of the system location or by the use of a GPS location detector, additional water quality tests may be run based on location, including checks for known local water contaminates, utilizing a variety of detectors, such as antibody chip detectors or cell-based detectors. The water quality sensors may detect an amount of contaminates in water. The sensors can be programmed to sound an alarm if the water quality value rises above a pre-programmed water quality value. The water quality value is the measured amount of contaminates in the water. Alternatively, a shut off switch may turn off the generation device if the water quality value rises about a pre-programmed water quality value.

Further, scale build-up in the generation device **10,** if any, can be determined by a variety of methods, including monitoring the heat transfer properties of the system or measuring the flow impedance. A variety of other sensors may be used to monitor a variety of other system parameters.

In the case in which generation device **10** is an electrical generator, either alone or in combination with a water purification device or other device, fuel enters the generation device from a tank, pipe, or other means through fuel inlet **24.** The amount of fuel consumed by generation device **10** can be determined through the use of a fuel sensor **23,** such as a flow sensor. Electricity generated, or in the case of a combined electrical generator and water purification device, excess electricity generated can be accessed through electricity outlet **15.** The amount of electricity used, either per event of cumulatively, may be determined by outlet sensor module **14.** A variety of other sensors may be used to monitor a variety of other system parameters.

In either of the cases described above, input sensor modules **21** and **23** as well as output sensor modules **11** and **14** may be coupled to a controller **100,** electrically or otherwise, in order to process, concatenate, store, or communicate the output values of the respective sensor modules as now described in the following section.

### Communications

The sensors described above may be used to monitor and/or record the various parameters described above onboard the generation device **10,** or in an alternative embodiment of the present invention, the generation device **10** may be equipped with a communication system **17,** such as a cellular communication system. The communication system **17** could be an internal system used solely for communication between the generation device **10** and the monitoring station **20.** Alternatively, the communication system **17** could be a cellular communication system that includes a cellular telephone for general communication through a cellular satellite system **19.** The communication system **17** may also employ wireless technology such as the Bluetooth® open specification. The communication system **17** may additionally include a GPS (Global Positioning System) locator.

Communication system **17** enables a variety of improvements to the generation device **10,** by enabling communication with a monitoring station **20.** For example, the monitoring station **20** may monitor the location of the generation device **10** to ensure that use in an intended location by an intended user. Additionally, the monitoring station **20** may monitor the amount of water and/or electricity produced, which may allow the calculation of usage charges. Additionally, the determination of the amount of water and/or electricity produced during a certain period or the cumulative hours of usage during a certain period, allows for the calculation of a preventative maintenance schedule. If it is determined that a maintenance call is required, either by the calculation of usage or by the output of any of the sensors used to determine water quality, the monitoring station **20** can arrange for a maintenance visit. In the case that a GPS (Global Positioning System) locator is in use, monitoring station **20** can determine the precise location of the generation device **10** to better facilitate a maintenance visit. The monitoring station **20** can also determine which water quality or other tests are most appropriate for the present location of the generation device **10.** The communication system **17** can also be used to turn the generation device **10** on or off, to pre-heat the device prior to use, or to deactivate the system in the event the system is relocated without advance warning, such as in the event of theft.

This information can be advantageously monitored through the use of a web-based utility monitoring system, such as those produced by Teletrol Systems, Inc. of Bedford, New Hampshire.

### Distribution

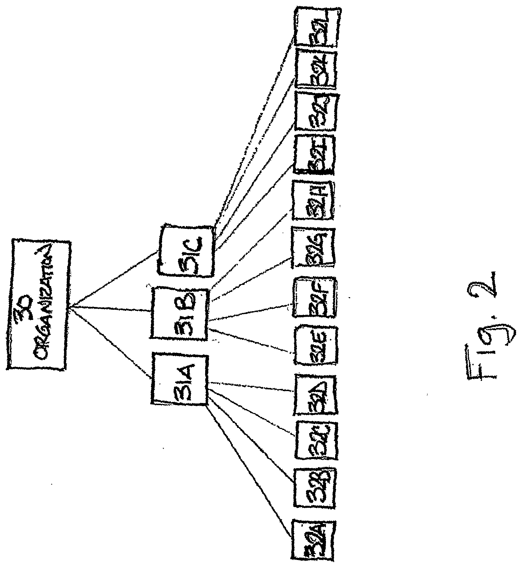

The use of the monitoring and communication system described above facilitates the use of a variety of utility distribution systems. For example, with reference to Figure 2, an organization **30,** such as a Government agency, non-governmental agency (NGO), or privately funded relief organization, a corporation, or a combination of these, could provide distributed utilities, such as safe drinking water or electricity, to a geographical or political area, such as an entire country. The organization **30** can then establish local distributors **31A, 31B,** and **31C.** These local distributors could preferably be a monitoring station **20** described above. In one possible arrangement, organization **30** could provide some number of generation devices **10** to the local distributor **31A,** etc. In another possible arrangement, the organization **30** could sell, loan, or make other financial arrangements for the distribution of the generation devices **10.** The local distributor **31A,** etc. could then either give these generation devices to operators **32A, 32 B,** etc., or provide the generation devices **10** to the operators though some type of financial arrangement, such as a sale or micro-loan.

The operator **32** could then provide distributed utilities to a village center, school, hospital, or other group at or near the point of water access. In one preferred embodiment, when the generation device **10** is provided to the operator **32** by means of a micro-loan, the operator **32** could charge the end users on a per-unit bases, such as per watt hour in the case of electricity or per liter in the case of purified water. Either the local distributor **31** or the organization **30** may monitor usage and other parameters using one of the communication systems described above. The distributor **31** or the organization **30** could then recoup some of the cost of the generation device **10** or effect repayment of the micro-loan by charging the operator **32** for some portion of the per-unit charges, such as 50%. The communication systems described additionally can be used to deactivate the generation device **10** if the generation device is relocated outside of a preset area or if payments are not made in a timely manner. This type of a distribution system may allow the distribution of needed utilities across a significant area quickly, while then allowing for at least the partial recoupment of funds, which, for example, could then be used to develop a similar system in another area.

In view of the foregoing, it will therefore be understood that the scope of the invention as defined in the following claims is not limited to the embodiments described herein, and that the above and numerous additional variations and modifications could be made thereto without departing from the scope of the invention..

## Claims

1. A monitoring system for water purification, the monitoring system comprising:
a water purification device (10) adapted to convert available source water (25) to purified water (13);
an input sensor module (21) comprising at least one input sensor adapted to measure a property of the source water input to the water purification device;
an output sensor module (11) comprising at least one water quality sensor adapted to measure the quality of the purified water output from the water purification device; and
a controller (100) adapted to determine the proper functioning of the water purification device (10) from signals sent by the input sensor module (21) and the output sensor module (11).

2. A monitoring system according to claim 1, wherein the at least one input sensor or the at least one water quality sensor is a flowrate monitor.

3. A monitoring system according to claim 1, wherein the at least one water quality sensor or the at least one input sensor is a turpidity sensor.

4. A monitoring system according to claim 1, wherein the at least one water quality sensor or the at least one input sensor is a conductivity sensor.

5. A monitoring system according to claim 1, wherein the at least one water quality sensor or the at least one input sensor is a temperature sensor.

6. A monitoring system according to claim 1, wherein the at least one water quality sensor or the at least one input sensor is a heat transfer monitor.

7. A monitoring system according to claim 1, further including a self-locating device having an output indicative of the location of the monitoring system.

8. A monitoring system according to claim 1, further comprising a shut off switch that automatically turns off the water purification device when the at least one water quality sensor rises above a pre-programmed water quality value.

9. A monitoring system according to claim 8, further comprising an alarm that alerts a user when the water quality value rises above a pre-programmed water quality value.

10. A monitoring system according to claim 8, further comprising a remotely operable shut off switch.

11. A monitoring system according to claim 1, further comprising a telemetry module adapted to communicate measured input and output parameters to a remote site.

12. A monitoring system according to claim 11, wherein the telemetry module is a wireless system.

13. A monitoring system according to claim 1, further including a remote actuator adapted to vary operating parameters of the water purification device based on remotely received instructions.

14. A monitoring system according to claim 7, wherein the self-locating device is a global positioning system.

15. A monitoring system according to claim 7, wherein monitored properties of the source water input and purified water output depend upon the location of the monitoring system.

## Patentansprüche

1. Überwachungssystem für die Wasserreinigung, wobei das Überwachungssystem aufweist:
eine Vorrichtung für die Wasserreinigung (10), die zum Umwandeln von verfügbarem Quellwasser (25) in gereinigtes Wasser (13) ausgeführt ist;
ein Eingangssensormodul (21), das wenigstens einen Eingangssensor aufweist, der zum Messen einer Eigenschaft des in die Vorrichtung für die Wasserreinigung eingegebenen Quellwassers ausgeführt ist;
ein Ausgangssensormodul (11), das wenigsten einen Wasserqualitätssensor aufweist, der zum Messen der Qualität des von der Vorrichtung für die Wasserreinigung ausgegebenen gereinigten Wassers ausgeführt ist; und
eine Steuerung (100), die zum Bestimmen des ordnungsgemäßen Funktionierens der Vorrichtung für die Wasserreinigung (10) anhand von durch das Eingangssensormodul (21) und das Ausgangssensormodul (11) gesendeten Signalen ausgeführt ist.

2. Überwachungssystem nach Anspruch 1, wobei der wenigstens eine Eingangssensor oder der wenigstens eine Wasserqualitätssensor ein Durchflusssensor ist.

3. Überwachungssystem nach Anspruch 1, wobei der wenigstens eine Wasserqualitätssensor oder der wenigstens eine Wassereingangssensor ein Trübungssensor ist.

4. Überwachungssystem nach Anspruch 1, wobei der wenigstens eine Wasserqualitätssensor oder der wenigstens eine Eingangssensor ein Leitfähigkeitssensor ist.

5. Überwachungssystem nach Anspruch 1, wobei der wenigstens eine Wasserqualitätssensor oder der wenigstens eine Eingangssensor ein Temperatursensor ist.

6. Überwachungssystem nach Anspruch 1, wobei der wenigstens eine Wasserqualitätssensor oder der wenigstens eine Eingangssensor ein Wärmeübergangssensor ist.

7. Überwachungssystem nach Anspruch 1, das ferner eine Selbstpositionierungsvorrichtung enthält, die einen Ausgang hat, der den Ort des Überwachungssystems erkennen lässt.

8. Überwachungssystem nach Anspruch 1, das ferner einen Abschaltungsschalter aufweist, der die Vorrichtung für die Wasserreinigung automatisch abschaltet, wenn der wenigstens eine Wasserqualitätssensor über einen vorprogrammierten Wasserqualitätswert steigt.

9. Überwachungssystem nach Anspruch 8, das ferner einen Alarm aufweist, der einen Benutzer warnt, wenn der Wasserqualitätswert über einen vorprogrammierten Wasserqualitätswert steigt.

10. Überwachungssystem nach Anspruch 8, das ferner einen fernbedienbaren Abschaltungsschalter aufweist.

11. Überwachungssystem nach Anspruch 1, das ferner ein Telemetriemodul aufweist, das zum Übermitteln gemessener Eingangs- und Ausgangsparameter an einen fernen Ort ausgeführt ist.

12. Überwachungssystem nach Anspruch 11, wobei das Telemetriemodul ein drahtloses Modul ist.

13. Überwachungssystem nach Anspruch 1, das ferner einen ferngesteuerten Aktor enthält, der zum Variieren von Betriebsparametern der Wasserreinigungsvorrichtung auf Basis von per Fernsteuerung empfangenen Anweisungen ausgeführt ist.

14. Überwachungssystem nach Anspruch 7, wobei die Selbstpositionierungsvorrichtung ein globales Positionsbestimmungssystem ist.

15. Überwachungssystem nach Anspruch 7, wobei die überwachten Eigenschaften des Eingangs für Quellwasser und des Ausgangs für gereinigtes Wasser vom Ort des Überwachungssystems abhängen.

## Revendications

1. Système de surveillance destiné à la purification d'eau, le système de surveillance comportant :
un dispositif de purification d'eau (10) conçu pour convertir une source d'eau disponible (25) en eau purifiée (13) ;
un module de capteur d'entrée (21) comportant au moins un capteur d'entrée conçu pour mesurer une propriété de l'entrée d'eau de source vers le dispositif de purification d'eau ;
un module de capteur de sortie (11) comportant au moins un capteur de la qualité de l'eau conçu pour mesurer la qualité de la sortie d'eau purifiée provenant du dispositif de purification d'eau ; et
un organe de commande (100) conçu pour déterminer le fonctionnement correct du dispositif de purification d'eau (10) à partir des signaux envoyés par le module de capteur d'entrée (21) et le module de capteur de sortie (11).

2. Système de surveillance selon la revendication 1, dans lequel ledit au moins un capteur d'entrée ou ledit au moins un capteur de la qualité de l'eau est un dispositif de surveillance du débit.

3. Système de surveillance selon la revendication 1, dans lequel ledit au moins un capteur de la qualité de l'eau ou ledit au moins un capteur d'entrée est un capteur de turbidité.

4. Système de surveillance selon la revendication 1, dans lequel ledit au moins un capteur de la qualité de l'eau ou ledit au moins un capteur d'entrée est un capteur de conductivité.

5. Système de surveillance selon la revendication 1, dans lequel ledit au moins un capteur de la qualité de l'eau ou ledit au moins un capteur d'entrée est un capteur de température.

6. Système de surveillance selon la revendication 1, dans lequel ledit au moins un capteur de la qualité de l'eau ou ledit au moins un capteur d'entrée est un appareil de surveillance du transfert de chaleur.

7. Système de surveillance selon la revendication 1, comprenant en outre un dispositif de localisation automatique muni une sortie indiquant l'emplacement du système de surveillance.

8. Système de surveillance selon la revendication 1, comportant en outre un interrupteur d'arrêt qui éteint automatiquement le dispositif de purification d'eau lorsque ledit au moins un capteur de la qualité de l'eau s'élève au-dessus d'une valeur de qualité de l'eau préprogrammée.

9. Système de surveillance selon la revendication 8, comportant en outre une alarme qui avertit un utilisateur lorsque la valeur de qualité de l'eau s'élève au-dessus d'une valeur de qualité de l'eau préprogrammée.

10. Système de surveillance selon la revendication 8, comportant en outre un interrupteur d'arrêt pouvant être commandé à distance.

11. Système de surveillance selon la revendication 1, comportant en outre un module de télémétrie conçu pour communiquer les paramètres d'entrée et de sortie mesurés à un site distant.

12. Système de surveillance selon la revendication 11, dans lequel le module de télémétrie est un système sans fil.

13. Système de surveillance selon la revendication 1, comprenant en outre un actionneur à distance conçu pour faire varier les paramètres d'exploitation du dispositif de purification d'eau sur la base d'instructions reçues à distance.

14. Système de surveillance selon la revendication 7, dans lequel le dispositif de localisation automatique est un système de positionnement global.

15. Système de surveillance selon la revendication 7, dans lequel les propriétés surveillées de l'entrée d'eau de source et de la sortie d'eau purifiée dépendent de l'emplacement du système de surveillance.
